# EUROPEAN PATENT APPLICATION

(11) **EP 4 773 618 A1**
(43) Date of publication of application: **08.07.2026**
(21) Application number: 24879928.0
(22) Date of filing: 21.08.2024
(51) Int. Cl.: H04N 23/55, H04N 23/54, H04N 23/57, G03B 17/12, G03B 30/00, G02B 9/60, G02B 13/00, G02B 5/20

(54) **CAMERA MODULE AND ELECTRONIC DEVICE COMPRISING SAME**

(30) Priority: 17.10.2023 KR 20230138718; 04.12.2023 KR 20230173775
(71) Applicant: Samsung Electronics Co., Ltd., Suwon-si, Gyeonggi-do 16677 (KR)
(72) Inventor: JEON, Sangyong, Suwon-si Gyeonggi-do 16677 (KR); YU, Seulgee, Suwon-si Gyeonggi-do 16677 (KR); LEE, Hwanseon, Suwon-si Gyeonggi-do 16677 (KR)
(74) Representative: HGF
(86) International application number: PCT/KR2024/012434
(87) International publication number: WO 2025/084588

(57) **Abstract**

A camera module according to an embodiment of the present disclosure may comprise: an image sensor; and a lens assembly including at least five lenses sequentially aligned on the optical axis in a direction toward the image sensor. In an embodiment, in the camera module as described above, the lens assembly may include: a first lens disposed farthest from the image sensor among the at least five lenses; an nth lens disposed closest to the image sensor among the at least five lenses; at least three lenses disposed between the first lens and the nth lens among the at least five lenses; a first filter layer provided on at least one of the lens surfaces of the at least three lenses and having a transmittance of 30% or less with respect to at least a part of light in a wavelength band of 800-950 nm; and a second filter layer provided on at least another one of the lens surfaces of the at least three lenses and having a transmittance of 30% or less with respect to at least a part of light in a wavelength band of 1000-1200 nm. Other various embodiments may also be possible.

## Description

### [Technical Field]

An embodiment of the disclosure relates to an electronic device and, for example, to a camera module and/or an electronic device including same.

### [Background Art]

The term "electronic device" may refer to a device that performs a designated function in accordance with a program mounted thereon, such as a household appliance, an electronic notebook, a portable multimedia player, a mobile communication terminal, a tablet personal computer (PC), a video/audio device, a desktop/laptop computer, and/or a vehicle navigation device. For example, these electronic devices may output stored information as a sound or an image. As the integration of electronic devices increases and ultra-high-speed/large-capacity wireless communication becomes more widespread, recently, a single electronic device, such as a mobile terminal, can be equipped with various functions. For example, not only communication functions, but also entertainment functions such as games, multimedia functions such as music and video playback, communication and security functions for mobile banking, and/or functions for managing schedules or electronic wallets are all integrated into a single electronic device.

As digital camera manufacturing technology has advanced, electronic devices equipped with compact and lightweight camera modules have become commercially available. As a camera module, for example, an imaging device, is mounted in an electronic device (e.g., a mobile communication terminal) that is generally always carried by a user, the user can easily use various functions such as video calls and/or augmented reality as well as photographing or video recording.

The above-described information may be provided as a related art for the purpose of aiding the understanding of the disclosure. It is not asserted or determined as to whether any of the above-described contents may be applied as a prior art with respect to the disclosure.

### [Detailed Description of the Invention]

### [Technical Solution]

A camera module according to an embodiment of the disclosure may include an image sensor and a lens assembly including at least five lenses sequentially aligned on an optical axis in a direction toward the image sensor. In an embodiment, in the camera module as described above, the lens assembly may include a first lens, which is disposed farthest from the image sensor, among the at least five lenses, an nth lens, which is disposed closest to the image sensor, among the at least five lenses, at least three lenses, which are arranged between the first lens and the nth lens, among the at least five lenses, a first filter layer provided on at least one of lens surfaces of the at least three lenses, the first filter layer having a transmittance of 30% or less with respect to at least a portion of light in a wavelength band of 800-950 nm, and a second filter layer provided on at least one of the other lens surfaces of the at least three lenses, the second filter layer having a transmittance of 30% or less with respect to at least a portion of light in a wavelength band of 1000-1200 nm.

According to an embodiment of the disclosure, an electronic device may include an image sensor, a processor configured to acquire a subject image by using the image sensor, and a lens assembly including at least five lenses sequentially aligned on an optical axis in a direction toward the image sensor. In an embodiment, the lens assembly may include a first lens, which is disposed farthest from the image sensor, among the at least five lenses, an nth lens, which is disposed closest to the image sensor, among the at least five lenses, at least three lenses, which are arranged between the first lens and the nth lens, among the at least five lenses, a first filter layer provided on at least one of lens surfaces of the at least three lenses, the first filter layer having a transmittance of 30% or less with respect to at least a portion of light in a wavelength band of 800-950 nm, and a second filter layer provided on at least one of the other lens surfaces of the at least three lenses, the second filter layer having a transmittance of 30% or less with respect to at least a portion of light in a wavelength band of 1000-1200 nm.

### [Brief Description of Drawings]

The above-mentioned aspects or other aspects, configurations, and/or advantages of an embodiment of the disclosure may be more clearly understood through the following detailed description made with reference to the accompanying drawings.
FIG. 1 is a block diagram showing an electronic device in a network environment according to an embodiment of the disclosure.
FIG. 2 is a perspective view showing the front surface of an electronic device according to an embodiment of the disclosure.
FIG. 3 is a perspective view showing the rear surface of the electronic device illustrated in FIG. 2 according to an embodiment of the disclosure.
FIG. 4 is an exploded perspective view showing the electronic device illustrated in FIG. 2 according to an embodiment of the disclosure, that is, is a view showing the front surface thereof.
FIG. 5 is an exploded perspective view showing the electronic device illustrated in FIG. 2 according to an embodiment of the disclosure, that is, is a view showing the rear surface thereof.
FIG. 6 is a view showing a camera module according to an embodiment of the disclosure.
FIG. 7 is a view showing a camera module according to an embodiment of the disclosure.
FIG. 8 is a view showing a camera module according to an embodiment of the disclosure.
FIG. 9 is a view illustrating the transmittance and the reflectance of a first filter layer according to a first specification in a camera module according to an embodiment of the disclosure.
FIG. 10 is a view illustrating the transmittance and the reflectance of a first filter layer according to a second specification in a camera module according to an embodiment of the disclosure.
FIG. 11 is a view illustrating the transmittance and the reflectance of a second filter layer according to a first specification in a camera module according to an embodiment of the disclosure.
FIG. 12 is a view illustrating the transmittance and the reflectance of a second filter layer according to a second specification in a camera module according to an embodiment of the disclosure.
FIG. 13 is a view illustrating the transmittance when a first filter layer of a first specification and a second filter layer of a first specification are combined in a camera module according to an embodiment of the disclosure.

Throughout the appended drawings, similar reference numerals may be assigned to similar components, configurations, and/or structures.

### [Mode for Carrying out the Invention]

The performance of a camera module may be generally determined by the quality of captured image. For example, the quality of a captured image may be determined by the optical properties and the performance of a lens assembly, the performance of an image sensor, and/or the performance (e.g., the performance of post-processing the captured image) of an electronic device in which the camera module is mounted. The light (e.g., infrared light) of wavelengths which are detected by a photosensitive material or an image sensor but not detected by the naked eye of a user may be a cause degrading an image quality. The infrared light can further degrade the quality of a captured image in dark environments such as at night. Although a camera module and/or a lens assembly may include an infrared cut filter and thus may secure the quality of a captured image, a more compact camera module may be useful in a portable electronic device such as a mobile communication terminal.

In order to at least solve the foregoing issues and/or drawbacks and provides advantages described below, an embodiment of the disclosure may provide a camera module capable of suppressing light which is detected by a photosensitive material or an image sensor but not detected by the naked eye of a user to improve the quality of a captured image, and/or an electronic device including same.

An embodiment of the disclosure may provide a camera module which is easily miniaturized while providing equivalent quality of a captured image or better quality of a captured image, and/or an electronic device including same.

The technical solutions to be achieved in the disclosure are not limited to the technical solutions mentioned above, and other technical solutions not mentioned above may be obviously understood by those skilled in the technical field to which the disclosure belongs from the description below.

The following description with reference to the appended drawings may provide an understanding of various exemplary implementations of the disclosure, which include the claims and contents equivalent thereto. An exemplary embodiment disclosed in the following description includes various specific details to facilitate understanding, but is to be considered as one of various exemplary embodiments. Therefore, those ordinarily skilled in the art will understand that various changes and modifications to the various implementations disclosed in the disclosure may be made without departing from the scope and technical spirit of the disclosure. In addition, descriptions of well-known functions and configurations may be omitted for clarity and brevity.

The terms and words used in the following description and claims are not limited to the bibliographical meaning, but may be used in order to clearly and consistently describe an embodiment of the disclosure. Therefore, it will be obvious to those skilled in the art that the following description of various implementations of the disclosure is provided only for the purpose of description, not for the purpose of limiting the disclosure defined as the scope of the claims and equivalent thereto.

Unless the context clearly indicates otherwise, the singular forms "a," "an," and "the" should be understood to include the plural meanings. Accordingly, for example, the term "a component surface" may be understood as including one or more of the surfaces of the component.

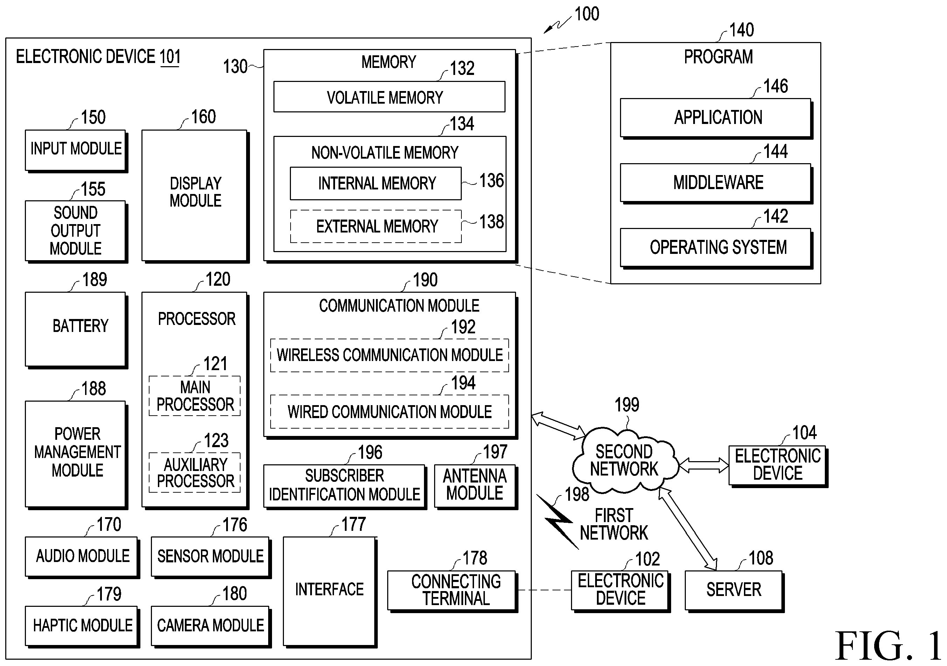

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

In the following detailed description, the length direction, the width direction, and/or the thickness direction of an electronic device may be mentioned, and the length direction may be defined as the "Y-axis direction", the width direction may be defined as the "X-axis direction", and/or the thickness direction may be defined as the "Z-axis direction". In an embodiment, regarding the direction to which an element is oriented, the orthogonal coordinate system illustrated in the drawings may be referenced, and a "negative/positive (-/+)" may be mentioned together. For example, the front surface of an electronic device and/or a housing may be defined as a surface oriented in the +Z-axis direction, and the rear surface thereof may be defined as a surface oriented in the -Z-axis direction. In an embodiment, the side surface of an electronic device and/or a housing may include an area facing the +X-axis direction, an area facing the +Y-axis direction, an area facing the -X-axis direction, and/or an area facing the -Y-axis direction. In an embodiment, the term "X-axis direction" may mean both of the "-X-axis direction" and the "+X-axis direction". It should be noted that the directions are defined with reference to the orthogonal coordinate system illustrated in the drawings for the sake of brevity of description, and the description of the directions or elements do not limit various embodiments of the disclosure. For example, the orthogonal coordinate system may be defined differently from that of the disclosure according to the design specifications of an electronic device or the user's usage habits.

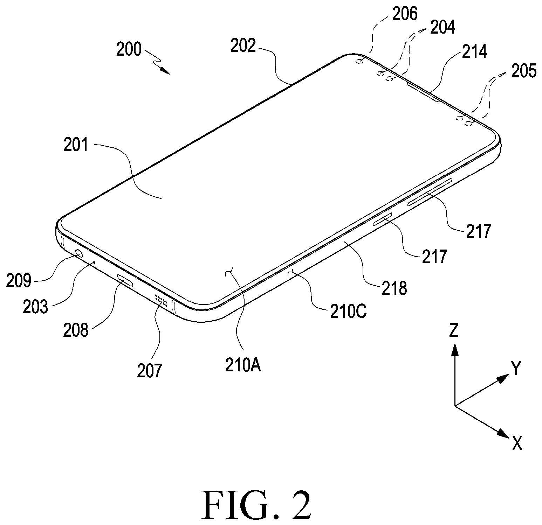

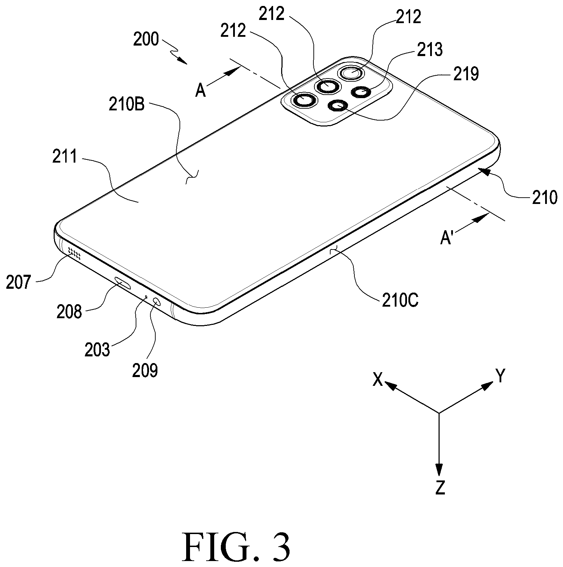

FIG. 2 is a perspective view showing the front surface of an electronic device 200 (e.g., the electronic device 101 of FIG. 1) according to an embodiment of the disclosure. FIG. 3 is a perspective view showing the rear surface of the electronic device 200 illustrated in FIG. 2 according to an embodiment of the disclosure.

Referring to FIG. 2 and FIG. 3, an electronic device 200 according to an embodiment may include a housing 210 including a first surface (or a front surface) 210A, a second surface (or a rear surface) 210B, and a side surface 210C surrounding a space between the first surface 210A and the second surface 210B. In an embodiment (not shown), the housing 210 may refer to a structure that forms a part of the first surface 210A of FIG. 2, the second surface 210B of FIG. 3, and the side surface 210C. According to an embodiment, at least a portion of the first surface 210A may be formed by a substantially transparent front plate 202 (e.g., a glass plate including various coating layers, or a polymer plate). The second surface 210B may be formed by a substantially opaque rear plate 211. For example, the rear plate 211 may be formed of coated or colored glass, ceramic, polymer, metal (e.g., aluminum, stainless steel (STS), or magnesium), or a combination of at least two of the above materials. The side surface 210C may be formed by a side structure (or a "side bezel structure") 218 which is coupled to the front plate 202 and the rear plate 211 and includes metal and/or polymer. In an embodiment, the rear plate 211 and the side structure 218 may be integrally formed and may include the same material (e.g., a metal material such as aluminum).

Although not illustrated, the front plate 202 may include an area or areas that is or are bent toward the rear plate 211 at least at a portion of the edge thereof and seamlessly extends. In an embodiment, only one of the areas in which the front plate 202 (or the rear plate 211) is bent and elongated toward the rear plate 211 (or the front plate 202) may be included at one side edge of the first surface 210A. According to an embodiment, the front plate 202 or the rear plate 211 may have a substantially flat plate shape, and in this case, may not include a bent/elongated area. When including a bent/elongated area, the thickness of the electronic device 200 at the portion including the bent/elongated area may be thinner than the thickness of other portions.

According to an embodiment, the electronic device 200 may include at least one of a display 201, audio modules 203, 207, and 214, sensor modules 204 and 219, camera modules 205, 212, and 213, a key input device 217, a light-emitting element 206, and connector holes 208 and 209. In an embodiment, at least one of the elements (e.g., the key input device 217 or the light-emitting element 206) may be omitted from the electronic device 200, or other elements may be additionally included in the electronic device.

For example, the display 201 may be exposed through a substantial portion of the front plate 202. In an embodiment, at least a portion of the display 201 may be exposed through the front plate 202 forming the first surface 210A or through a portion of the side surface 210C. In an embodiment, corners of the display 201 may be formed to be substantially the same as the outer peripheral shape of the front plate 202 adjacent thereto. In an embodiment (not shown), in order to expand the area in which the display 201 is exposed, the gap between the outer edge of the display 201 and the outer edge of the front plate 202 may be formed to be substantially equal.

In an embodiment (not shown), a recess or an opening may be formed in a portion of a screen display area of the display 201, and at least one of the audio module 214, the sensor module 204, the camera module 205, and the light-emitting element 206 aligned with the recess or the opening may be included therein. In an embodiment (not shown), at least one of the audio module 214, the sensor module 204, the camera module 205, a fingerprint sensor (not shown), and the light-emitting element 206 may be included on the rear surface of the screen display area of the display 201. In an embodiment (not shown), the display 201 may be coupled to or disposed adjacent to a touch sensor circuit, a pressure sensor capable of measuring the intensity (pressure) of a touch, and/or a digitizer for detecting an electromagnetic field-type stylus pen. In an embodiment, at least a portion of the sensor modules 204 and 219 and/or at least a portion of the key input device 217 may be disposed in areas (or spaces) overlapping the display 201.

According to an embodiment, the audio modules 203, 207, and 214 may include a microphone hole 203 and speaker holes 207 and 214. A microphone for acquiring external sound may be disposed in the microphone hole 203, and in an embodiment, a plurality of microphones may be arranged to detect the direction of sound. The speaker holes 207 and 214 may include an external speaker hole 207 and a call receiver hole 214. In an embodiment, the speaker holes 207 and 214 and the microphone hole 203 may be implemented as a single hole, or a speaker (e.g., a piezo speaker) may be included without the speaker holes 207 and 214.

According to an embodiment, the sensor modules 204 and 219 may generate an electrical signal or data value corresponding to an internal operational state of the electronic device 200 or an external environmental state. For example, the sensor modules 204 and 219 may include a first sensor module 204 (e.g., a proximity sensor) and/or a second sensor module (not shown) (e.g., a fingerprint sensor) disposed on the first surface 210A of the housing 210, and/or a third sensor module 219 and/or a fourth sensor module (e.g., a fingerprint sensor) disposed on the second surface 210B of the housing 210. The fingerprint sensor may be disposed not only on the first surface 210A (e.g., the display 201) of the housing 210, but also on the second surface 210B or the side surface 210C of the housing. For example, the electronic device 200 may further include at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 204.

According to an embodiment, the camera modules 205, 212, and 213 may include a first camera device 205 disposed on the first surface 210A of the electronic device 200, and a second camera device 212 and/or a flash 213 disposed on the second surface 210B. Each of the camera devices 205 and 212 may include one or more lenses, an image sensor, and/or an image signal processor. For example, the flash 213 may include a light-emitting diode or a xenon lamp. In an embodiment, two or more lenses (an infrared camera, a wide-angle, and a telephoto lens) and image sensors may be arranged on one surface of the electronic device 200. In an embodiment, the flash 213 may emit infrared light, and the infrared light, which is emitted by the flash 213 and then reflected by a subject, may be received through the third sensor module 219. The electronic device 200 or a processor of the electronic device 200 may detect depth information of a subject, based on a timing at which the infrared light is received at the third sensor module 219.

According to an embodiment, the key input device 217 may be disposed on the side surface 210C of the housing 210. In an embodiment, the electronic device 200 may not include a part or all of the above-mentioned key input devices 217, and the key input devices 217 not included therein may be implemented in another form, such as a soft key, on the display 201. In an embodiment, the key input device 217 may include a sensor module disposed on the second surface 210B of the housing 210.

According to an embodiment, for example, the light-emitting element 206 may be disposed on the first surface 210A of the housing 210. For example, the light-emitting element 206 may provide the state information of the electronic device 200 in the form of light. In an embodiment, for example, the light-emitting element 206 may provide a light source that operates in conjunction with the camera module 205. For example, the light-emitting element 206 may include an LED, an IR LED, and a xenon lamp.

According to an embodiment, the connector holes 208 and 209 may include a first connector hole 208 capable of accommodating a connector (for example, a USB connector) for transmitting and receiving power and/or data to and from an external electronic device, and/or a second connector hole 209 (e.g., an earphone jack) capable of accommodating a connector for transmitting and receiving an audio signal to and from an external electronic device.

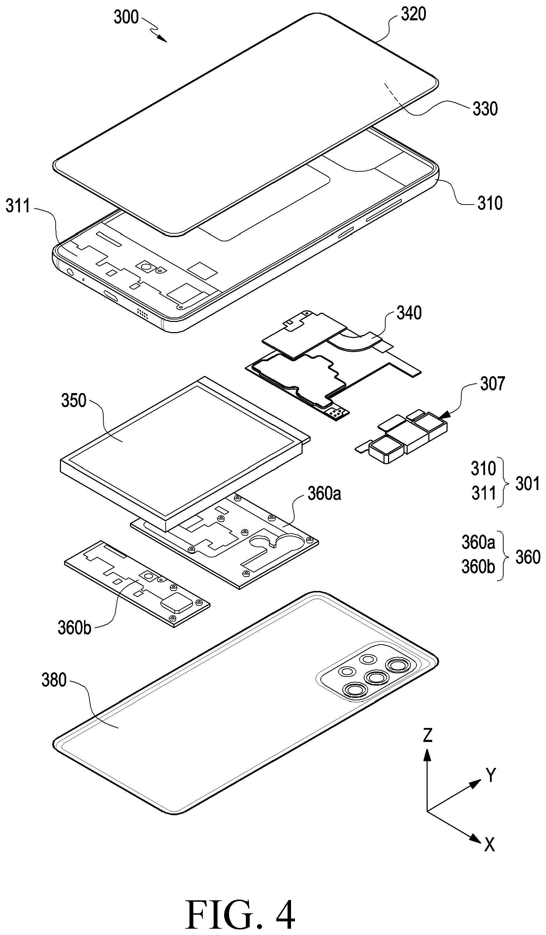

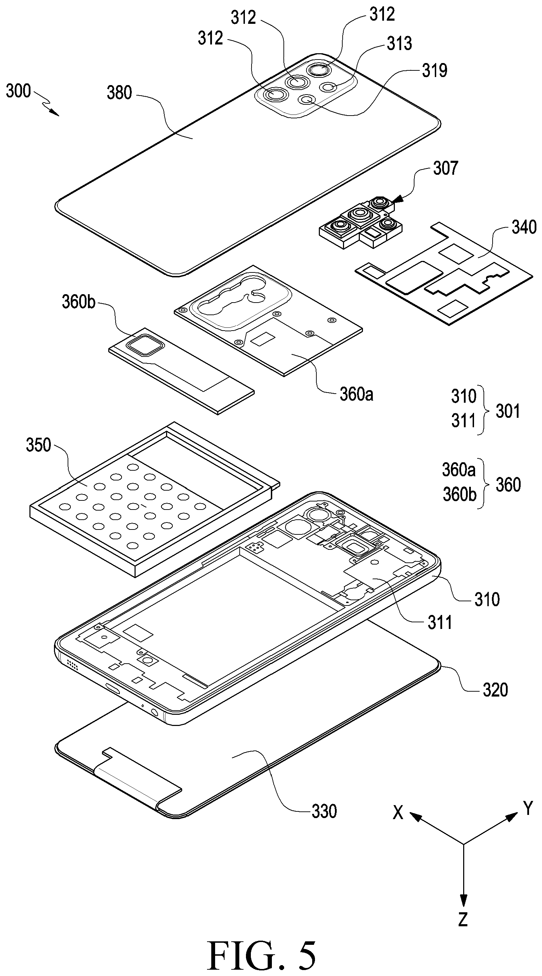

FIG. 4 is an exploded perspective view showing the electronic device 200 illustrated in FIG. 2 according to an embodiment of the disclosure, that is, is a view showing the front surface thereof. FIG. 5 is an exploded perspective view showing the electronic device 200 illustrated in FIG. 2 according to an embodiment of the disclosure, that is, is a view showing the rear surface thereof.

Referring to FIG. 4 and FIG. 5, an electronic device 300 (e.g., the electronic device 200 of FIG. 2 or FIG. 3) may include a side structure 310, a first support member 311 (e.g., a bracket), a front plate 320 (e.g., the front plate 202 of FIG. 2), a display 330 (e.g., the display 201 of FIG. 2), a printed circuit board (or a substrate assembly) 340, a battery 350, a second support member 360 (e.g., a rear case), an antenna, a camera assembly 307, and a rear plate 380 (e.g., the rear plate 211 of FIG. 3). In an embodiment, at least one (e.g., the first support member 311 or the second support member 360) of the elements may be omitted from the electronic device 300, or other elements may be additionally included in the electronic device. At least one of the elements of the electronic device 300 may be the same as or similar to at least one of the elements of the electronic device 200 of FIG. 2 or FIG. 3, and duplicate descriptions will be omitted below.

According to an embodiment, at least a portion of the first support member 311 may be provided in a flat plate shape. In an embodiment, the first support member 311 may be disposed in the electronic device 300, and be connected to the side structure 310 or be integrally formed with the side structure 310. For example, the first support member 311 may be formed of a metal material and/or a non-metal (e.g., polymer) material. When the first support member is at least partially formed of a metal material, a portion of the side structure 310 or the first support member 311 may function as an antenna. The first support member 311 may have one surface to which the display 330 is coupled and the other surface to which the printed circuit board 340 is coupled. The printed circuit board 340 may have a processor, memory, and/or an interface mounted thereon. For example, the processor may include one or more of a central processing unit, an application processor, a graphics processing unit, an image signal processor, a sensor hub processor, or a communication processor.

According to an embodiment, the first support member 311 and the side structure 310 may be combined and thus referred to as a front case or a housing 301. According to an embodiment, the housing 301 may be generally understood as a structure which accommodates, protects the printed circuit board 340 or the battery 350, or allows the printed circuit board or the battery to be disposed therein. In an embodiment, for example, the housing 301 may be understood to include a structure that is visually or tactually perceptible to a user in the appearance of the electronic device 300, such as the side structure 310, the front plate 320, and/or the rear plate 380. In an embodiment, the term "front surface or rear surface of the housing 301" may refer to the first surface 210A of FIG. 2 or the second surface 210B of FIG. 3. In an embodiment, the first support member 311 may be disposed between the front plate 320 (e.g., the first surface 210A of FIG. 2) and the rear plate 380 (e.g., the second surface 210B of FIG. 3), and may function as a structure for arranging electrical/electronic components such as the printed circuit board 340 or the camera assembly 307.

For example, the memory may include volatile memory or non-volatile memory.

For example, the interface may include a high-definition multimedia interface (HDMI), a universal serial bus (USB) interface, an SD card interface, and/or an audio interface. For example, the interface may electrically or physically connect the electronic device 300 to an external electronic device, and may include a USB connector, an SD card/MMC connector, or an audio connector.

According to an embodiment, for example, the second support member 360 may include an upper support member 360a and a lower support member 360b. In an embodiment, the upper support member 360a may be disposed to surround the printed circuit board 340 together with a portion of the first support member 311. Circuit devices (e.g., a processor, a communication module, or memory) implemented in an integrated circuit chip form and various electrical/electronic components may be arranged on the printed circuit board 340. According to an embodiment, the printed circuit board 340 may receive an electromagnetic shielding environment provided from the upper support member 360a. In an embodiment, the lower support member 360b may be used as a structure in which electrical/electronic components, such as a speaker module or an interface (e.g., a USB connector, an SD card/MMC connector, or an audio connector), may be arranged. In an embodiment, electrical/electronic components such as a speaker module and an interface (e.g., a USB connector, an SD card/MMC connector, or an audio connector) may be arranged on an additional printed circuit board (not shown). In this case, the lower support member 360b may be disposed to surround an additional printed circuit board together with another portion of the first support member 311. An additional printed circuit board not illustrated or a speaker module or an interface disposed on the lower support member 360b may be disposed to correspond to the audio module 207 or the connector holes 208 and 209 of FIG. 2.

According to an embodiment, the battery 350 may be a device for supplying power to at least one element of the electronic device 300 and for example, may include a non-rechargeable primary battery, a rechargeable secondary battery, or a fuel cell. For example, at least a portion of the battery 350 may be disposed on substantially the same plane as the printed circuit board 340. The battery 350 may be integrally disposed in the electronic device 300 or may be detachably disposed with respect to the electronic device 300.

Although not illustrated, for example, the antenna may include a conductive pattern implemented on a surface of the second support member 360 through a laser direct structuring (LDS) method. In an embodiment, the antenna may include a printed circuit pattern formed on the surface of a thin film, and the antenna having the form of a thin film may be disposed between the rear plate 380 and the battery 350. For example, the antenna may include a near field communication (NFC) antenna, a wireless charging antenna, and/or a magnetic secure transmission (MST) antenna. For example, the antenna may perform near-field communication with an external device, or may wirelessly transmit and receive power required for charging. In an embodiment, a different antenna structure may be formed by a portion of the side structure 310 and/or the first support member 311 or a combination thereof.

According to an embodiment, the camera assembly 307 may include at least one camera module, for example, at least one of the camera modules 212 and 213 of FIG. 3. In the electronic device 300, the camera assembly 307 may receive at least a portion of light incident through an optical hole or a camera window 312, 313, or 319. In an embodiment, the camera assembly 307 may be disposed on the first support member 311 at a position adjacent to the printed circuit board 340. In an embodiment, a camera module or camera modules of the camera assembly 307 may be generally aligned with one of the camera windows 312, 313, and 319, and may be at least partially surrounded by the second support member 360 (e.g., the upper support member 360a). When the camera assembly 307 or the camera modules 212 and 213 of FIG. 3 are arranged, the electronic device 300 or the first support member 311 may include a structure such as at least one support wall or an elastic member to mount or fix the camera assembly 307.

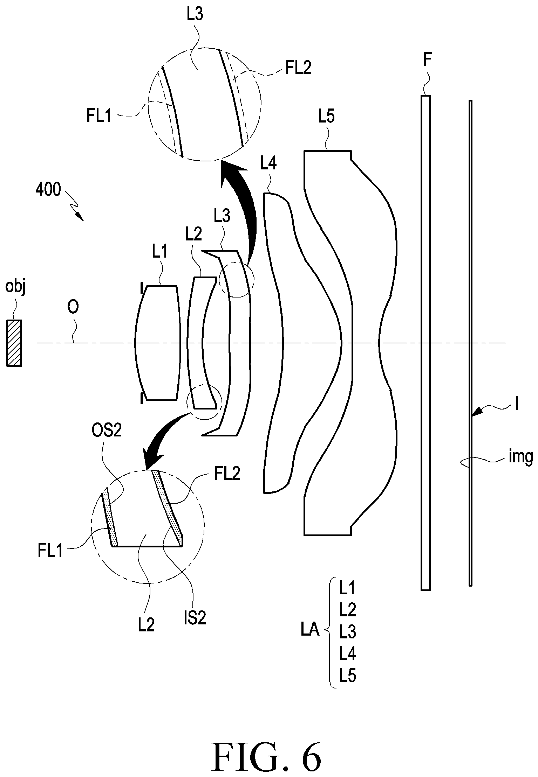

The camera modules 205, 212, and 213 of FIG. 2 and FIG. 3 or the camera assembly 307 of FIG. 5 described above may be implemented by at least one of the camera modules 400, 500, and 600 of FIG. 6 to FIG. 8 described below. Accordingly, in the following detailed description, the electronic devices 200 and 300 of the preceding embodiments may be referenced, and it should be noted that reference numerals in the drawings with respect to configurations which may be easily understood through the preceding embodiments may be the same as those of the preceding embodiments or be omitted, and descriptions of configurations thereof may be omitted.

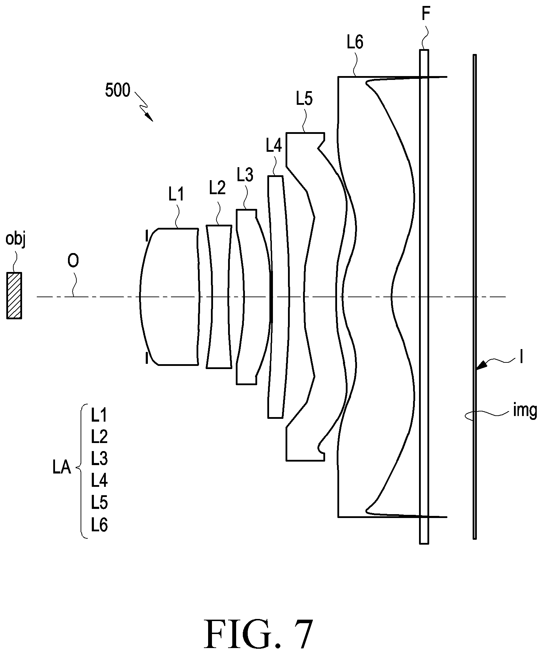

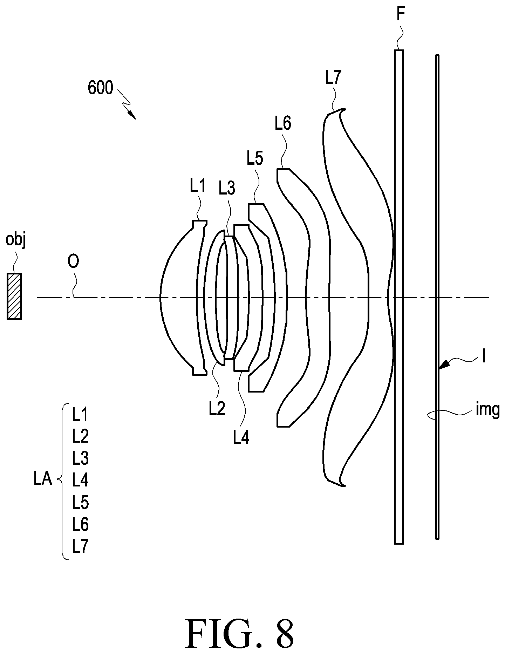

FIG. 6 is a view showing a camera module 400 (e.g., the camera module 205, 212, or 213 of FIG. 2 and FIG. 3 or the camera assembly 307 of FIG. 5) according to an embodiment of the disclosure. FIG. 7 is a view showing a camera module 500 (e.g., the camera module 205, 212, or 213 of FIG. 2 and FIG. 3 or the camera assembly 307 of FIG. 5) according to an embodiment of the disclosure. FIG. 8 is a view showing a camera module 600 (e.g., the camera module 205, 212, or 213 of FIG. 2 and FIG. 3 or the camera assembly 307 of FIG. 5) according to an embodiment of the disclosure.

Referring to FIG. 6 to FIG. 8, the camera module 400, 500, or 600 may include an image sensor I and a lens assembly LA. In an embodiment, the lens assembly LA may include at least five lenses L1, L2, L3, L4, L5, L6, and L7 sequentially aligned on an optical axis O in a direction toward the image sensor I (e.g., the imaging surface img). For example, the lens assembly LA may focus or guide light containing information about a subject obj to the image sensor I. In an embodiment, the camera module 400, 500, or 600 and/or the lens assembly LA may include a first filter layer FL1 provided on at least one of lens surfaces of the at least five lenses L1, L2, L3, L4, L5, L6, and L7, and a second filter layer FL2 provided on at least another one of the lens surfaces of the at least five lenses L1, L2, L3, L4, L5, L6, and L7.

Although reference numerals are not assigned to the individual lens surfaces for the sake of brevity in the drawings, those skilled in the art will readily appreciate that each of the at least five lenses L1, L2, L3, L4, L5, L6, and L7 includes a surface directed toward the subject obj and a surface directed toward the image sensor I. For the sake of brevity in the drawings, it should be noted that the first filter layer FL1 and/or the second filter layer FL2 are omitted in FIG. 7 and FIG. 8, and in relation thereto, it will be understood by those skilled in the art that the camera module 500 or 600 and/or the lens assembly LA of FIG. 7 and FIG. 8 includes the first filter layer FL1 and the second filter layer FL2 through the detailed description described below.

According to an embodiment, a serial number may be assigned to the at least five lenses L1, L2, L3, L4, and L5 sequentially from the lens disposed farthest from the image sensor I. For example, the lens disposed farthest from the image sensor I may be referred to as a "first lens L1," and the lens disposed closest to the image sensor I may be referred to as an "nth lens". As illustrated in FIG. 6, when the camera module 400 and/or the lens assembly LA includes five lenses L1, L2, L3, L4, and L5, the "nth lens" may refer to the fifth lens L5. In an embodiment, as illustrated in FIG. 7, when the camera module 500 and/or the lens assembly LA includes six lenses L1, L2, L3, L4, L5, and L6, the "nth lens" may refer to the sixth lens L6, and as illustrated in FIG. 8, when the camera module 600 and/or the lens assembly LA includes seven lenses L1, L2, L3, L4, L5, L6, and L7, the "nth lens" may refer to the seventh lens L7. In an embodiment, the first lens L1 may be referred to as a subject-side first lens, and the nth lens L5, L6, or L7 may be referred to as an image sensor-side first lens. In an embodiment, it may be understood that the first filter layer FL1 and/or the second filter layer FL2 is provided on at least one of the lens surfaces of lenses arranged between the first lens L1 and the nth lens L5, L6, or L7. In an embodiment, a structure in which the first filter layer FL1 and/or the second filter layer FL2 is disposed on a surface, which faces the image sensor of the first lens L1, or on a surface, which faces the subject of the nth lens L5, L6, or L7, may be implemented.

According to an embodiment, the first filter layer FL1 and/or the second filter layer FL2 may block light in a designated wavelength band. For example, the first filter layer FL1 may block at least a part of light in a wavelength band of about 800 nm or more and about 950 nm or less, and the second filter layer FL2 may block at least a part of light in a wavelength band of about 1000 nm or more and about 1200 nm or less. In an embodiment, the first filter layer FL1 may have a transmittance of about 30% or less (e.g., a blocking rate or a reflectance of about 70% or more) with respect to at least a portion of light in a wavelength band of about 800 nm or more and about 950 nm or less. In an embodiment, the first filter layer FL1 may provide a minimum transmittance with respect to light in a wavelength band of about 800 nm or more and about 950 nm or less, and it may be understood that the transmittance of the first filter layer FL1 with respect to the light in the corresponding wavelength is about 30% or less. In an embodiment, the second filter layer FL2 may have a transmittance of about 30% or less with respect to at least a portion of light in a wavelength band of about 1000 nm or more and about 1200 nm or less. In an embodiment, the second filter layer FL2 may provide a minimum transmittance with respect to light in a wavelength band of about 1000 nm or more and about 1200 nm or less, and it may be understood that the transmittance of the second filter layer FL2 with respect to the light in the corresponding wavelength is about 30% or less. When the first filter layer FL1 and the second filter layer FL2 are combined and arranged in the lens assembly LA, the camera module 400, 500, or 600 and/or the lens assembly LA may have a transmittance of about 20% or less (or about 15% or less) with respect to light in a wavelength band of about 700 nm or more and about 1200 nm or less. As will be described below, when the first filter layer FL1 manufactured according to the specification exemplified in the below table 1 and the second filter layer FL2 manufactured according to the specification exemplified in the below table 3 are combined and arranged, it is identified that the camera modules 400, 500, and 600 and/or the lens assembly LA have a transmittance of about 10% or less with respect to infrared light (e.g., light in a wavelength band of about 700 nm or more and about 1200 nm or less).

As described above, the camera module 400, 500, or 600 and/or the lens assembly LA according to an embodiment or embodiments of the disclosure may include the first filter layer FL1 and/or the second filter layer FL2 provided on a lens surface or lens surfaces, and thus may suppress light (e.g., infrared light) in a wavelength which is detected by the image sensor I but is not recognized by the naked eye of a user from reaching the image sensor I. In an embodiment, when the first filter layer FL1 and the second filter layer FL2 are combined, light in a wavelength band of about 700 nm or more and about 1200 nm or less may not substantially reach the image sensor I. For example, the camera modules 400, 500, and 600 and/or the lens assembly LA according to an embodiment or embodiments of the disclosure may substantially block infrared light and acquire images of improved quality even without including a separate infrared cut filter F. Accordingly, the camera modules 400, 500, and 600 and/or the lens assembly LA according to an embodiment or embodiments of the disclosure may provide images of improved quality and be easily miniaturized by not including the infrared cut filter F. In FIG. 6 to FIG. 8, the camera module 400, 500, or 600 and/or the lens assembly LA further including an infrared cut filter F separate from the first filter layer FL1 and/or the second filter layer FL2 may be illustrated. By further including the infrared cut filter F separate from the first filter layer FL1 and/or the second filter layer FL2, the camera module 400, 500, or 600 and/or the lens assembly LA may provide images of even higher quality.

According to an embodiment, the first filter layer FL1 and/or the second filter layer FL2 may be disposed between a lens (e.g., the first lens L1) farthest from the image sensor I and a lens (e.g., the nth lens L5, L6, or L7) closest to the image sensor. In an embodiment, the first filter layer FL1 and/or the second filter layer FL2 may be disposed on the lens surfaces of at least three lenses between the first lens L1 and the nth lens L5, L6, or L7. For example, the first filter layer FL1 and/or the second filter layer FL2 may not be directly exposed to external air, moisture, and/or various foreign substances. In an embodiment, as the first filter layer and/or the second filter layer is not directly exposed to (or in contact with) the external environment, cracking, scratching, and/or discoloration of the first filter layer FL1 and/or the second filter layer FL2 may be suppressed, and the reliability of the lens assembly LA and/or the camera module 400, 500, or 600 may be improved.

According to an embodiment, in manufacturing at least five lenses L1, L2, L3, L4, L5, L6, and L7 in a design shape, at least one of the at least five lenses L1, L2, L3, L4, L5, L6, and L7 may be made of a plastic lens. When at least a part of the at least five lenses L1, L2, L3, L4, L5, L6, and L7 are made of a plastic lens, they may be easily molded into a design shape and be easily mass-produced. In an embodiment, the lens(es) provided with the first filter layer FL1 and/or the second filter layer FL2 may be a plastic lens. However, the disclosure is not limited thereto, and it should be noted that the first filter layer FL1 and/or the second filter layer FL2 may be provided on a lens or lenses containing a glass component.

According to an embodiment, as illustrated in FIG. 6, the first filter layer FL1 and/or the second filter layer FL2 may be implemented on at least one of the lens surfaces of at least three lenses (e.g., the second lens L2, the third lens L3, and/or the fourth lens L4) arranged between the first lens L1 and the fifth lens L5. In an embodiment, when the first filter layer FL1 is provided on one of a subject-side surface OS2 and an image sensor-side surface IS2 of the second lens L2, it may be understood that the second filter layer FL2 is provided on the other of the subject-side surface OS2 and the image sensor-side surface IS2 of the second lens L2. In an embodiment, regardless of whether the first filter layer FL1 and/or the second filter layer FL2 is provided on the second lens L2, the first filter layer FL1 and/or the second filter layer FL2 may be provided on the third lens L3 (and/or the fourth lens L4).

According to an embodiment, the first filter layer FL1 may be provided on both lens surfaces of the second lens L2, and the second filter layer FL2 may be provided on both lens surfaces of the third lens L3 (and/or the fourth lens L4). For example, the first filter layer FL1 may be provided on at least one of the lens surfaces of lenses arranged between the first lens L1 and the fifth lens L5, and the second filter layer FL2 may be provided on at least one of the other lens surfaces of the lenses arranged between the first lens L1 and the fifth lens L5. In the embodiment of FIG. 7, the first filter layer FL1 may be provided on at least one of the lens surfaces of lenses arranged between the first lens L1 and the sixth lens L6, and the second filter layer FL2 may be provided on at least another one of the lens surfaces of the lenses arranged between the first lens L1 and the sixth lens L6. In the embodiment of FIG. 8, the first filter layer FL1 may be provided on at least one of the lens surfaces of lenses arranged between the first lens L1 and the seventh lens L7, and the second filter layer FL2 may be provided on at least another one of the lens surfaces of the lenses arranged between the first lens L1 and the seventh lens L7. As described above, it should be noted that the number and the position in the arrangement of the first filter layer FL1 and the second filter layer FL2 are not limited to the embodiment(s) of the disclosure described above or the illustrated embodiment.

According to an embodiment, the lens provided with the first filter layer FL1 and/or the second filter layer FL2 may be a lens having the smallest volume or effective diameter or the second smallest volume or effective diameter among the lenses arranged between the first lens L1 and the nth lens L5, L6, or L7. In an embodiment, the lens provided with the first filter layer FL1 and/or the second filter layer FL2 may be a lens having the smallest or the second smallest outer diameter among the lenses arranged between the first lens L1 and the nth lens L5, L6, or L7. For example, the first filter layer FL1 and/or the second filter layer FL2 may be preferentially provided to a lens having a small volume or effective diameter. In general, a lens may contract or expand due to changes in temperature or humidity, and the contraction or expansion of the lens may cause deformation of the first filter layer FL1 and/or the second filter layer FL2. For example, deviation in optical performance of the camera modules 400, 500, and 600 may occur according to an operation environment. As the volume or effective diameter of the lens provided with the filter layer(s) FL1 and/or FL2 increases, the deviation in optical performance thereof according to an operation environment may also increase. According to an embodiment or embodiments of the disclosure, by providing the first filter layer FL1 and/or the second filter layer FL2 to the lens having the smallest volume or effective diameter or the second smallest volume or effective diameter, degradation of the performance of the camera module 400, 500, or 600 due to changes in an operation environment may be suppressed. In the embodiment of FIG. 6 or FIG. 7, it may be understood that the effective diameter of the second lens L2 is the smallest, and in the embodiment of FIG. 8, it may be understood that the effective diameter of the third lens L3 is the smallest. In an embodiment, when a part of the lenses disposed between the first lens L1 and the nth lens L5, L6, or L7 are made of a material (e.g., glass) which does not substantially affect optical performance in terms of the degree of contraction or expansion due to changes in temperature or humidity, the first filter layer FL1 and/or the second filter layer FL2 may be provided on the lens made of glass regardless of the volume or effective diameter of a lens. For example, considering the material of lens(es), the first filter layer FL1 and/or the second filter layer FL2 may be disposed on lens(es) having a relatively small volume or effective diameter, but it should be noted that an embodiment or embodiments of the disclosure is or are not limited thereto. In an embodiment, the first filter layer FL1 and/or the second filter layer FL2 may be provided on a lens, which is a plastic lens and has a relatively small volume (or a relatively small effective diameter), among the lenses arranged between the first lens L1 and the nth lens L5, L6, or L7. In the above-described embodiment, it has been mentioned that the first filter layer FL1 and/or the second filter layer FL2 is preferentially provided on a lens or lenses having a small effective diameter, but it should be noted that the embodiment or embodiments of the disclosure is or are not limited thereto. For example, regardless of the effective diameter of a lens, the first filter layer FL1 and/or the second filter layer FL2 may be preferentially provided on a lens or lenses having a small outer diameter.

According to an embodiment, the first filter layer FL1 and/or the second filter layer FL2 may be provided on a lens having a greater curvature (e.g., on a lens surface having the greatest curvature or the second greatest curvature) among the lenses between the first lens L1 and the nth lens L5, L6, or L7. Here, the curvature of a lens (or a lens surface) may refer to the curvature at a point where the optical axis intersects. In an embodiment, in order to suppress degradation of image quality in the peripheral area thereof due to infrared light, the first filter layer FL1 and/or the second filter layer FL2 may be provided on a lens having a relatively large curvature or a lens surface having a relatively large curvature.

According to an embodiment, the first filter layer FL1 may include a plurality of low refractive material layers and a plurality of high refractive material layers alternately stacked. For example, the first filter layer FL1 may be implemented by alternately stacking at least six low refractive material layers and at least six high refractive material layers. As mentioned above, the first filter layer FL1 may be disposed between the first lens L1 and the nth lens L5, L6, or L7), and in an embodiment, it may be understood that the first filter layer FL1 is provided on at least one of the lens surfaces of at least three lenses between the first lens L1 and the nth lens L5, L6, or L7.

According to an embodiment, the first filter layer FL1 may be manufactured according to a first specification presented through the following [Table 1], or a second specification presented through the following [Table 2].

**[Table 1]**

| Material layer | Material | Refractive Index | Extinction Coefficient | Full wavelength optical thickness (FWOT) | Physical thickness (nm) |
|---|---|---|---|---|---|
| | Air | 1 | | | |
| 1 | L | 1.460 | 0 | 0.20363166 | 76.71 |
| 2 | H | 2.318 | 0.00016 | 0.39091864 | 92.74 |
| 3 | L | 1.460 | 0 | 0.40576599 | 152.87 |
| 4 | H | 2.318 | 0.00016 | 0.38231857 | 90.7 |
| 5 | L | 1.460 | 0 | 0.39479385 | 148.73 |
| 6 | H | 2.318 | 0.00016 | 0.37452046 | 88.85 |
| 7 | L | 1.460 | 0 | 0.39422029 | 148.52 |
| 8 | H | 2.318 | 0.00016 | 0.38843128 | 92.15 |
| 9 | L | 1.460 | 0 | 0.41796604 | 157.46 |
| 10 | H | 2.318 | 0.00016 | 0.42747333 | 101.41 |
| 11 | L | 1.460 | 0 | 0.07910393 | 29.8 |
| 12 | H | 2.318 | 0.00016 | 0.03988778 | 9.46 |
| Substrate | | 1.546 | 0 | | |

**[Table 2]**

| Material layer | Material | Refractive Index | Extinction Coefficient | Full wavelength optical thickness (FWOT) | Physical thickness (nm) |
|---|---|---|---|---|---|
| | Air | 1 | | | |
| 1 | L | 1.460 | 0 | 0.20009142 | 75.38 |
| 2 | H | 2.318 | 0.00016 | 0.38910661 | 92.31 |
| 3 | L | 1.460 | 0 | 0.40865581 | 153.95 |
| 4 | H | 2.318 | 0.00016 | 0.37771915 | 89.61 |
| 5 | L | 1.460 | 0 | 0.39404552 | 148.45 |
| 6 | H | 2.318 | 0.00016 | 0.37766198 | 89.6 |
| 7 | L | 1.460 | 0 | 0.39373492 | 148.33 |
| 8 | H | 2.318 | 0.00016 | 0.38673501 | 91.75 |
| 9 | L | 1.460 | 0 | 0.4188052 | 157.78 |
| 10 | H | 2.318 | 0.00016 | 0.4324865 | 102.6 |
| 11 | L | 1.460 | 0 | 0.0820824 | 30.92 |
| 12 | H | 2.318 | 0.00016 | 0.04435691 | 10.52 |
| Substrate | | 1.546 | 0 | | |

In [Table 1] and [Table 2] described above, and in [Table 3] and [Table 4] described below, a serial number assigned to the low refractive material layers and the high refractive material layers implementing the first filter layer FL1 is given to indicate the term "material layer", and the term "substrate" may refer to a lens or lenses on which the first filter layer FL1 is disposed. In the above-described or the later-described manufacturing specification, the term "material" refers to the material or the substance of the material of the material layer, and the term "L" may indicate a low refractive material and the term "H" may indicate a high refractive material. In [Tables 1-4] relating to the above-described or the later-described manufacturing specification, the refractive index, the extinction coefficient, and/or the full wavelength optical thickness may be understood as values measured when light in a wavelength of about 550 nm is incident perpendicularly on the corresponding material layer (e.g., along the optical axis direction).

According to an embodiment, in implementing the first filter layer FL1, the low refractive material layer(s) may contain about 50% or more of a silicon oxide-based material (e.g., SiO₂). In an embodiment, the high refractive material layer(s) may contain about 50% or more of a titanium oxide-based material (e.g., TiO₂). In an embodiment, when about 50% or more of a titanium oxide-based material (e.g., TiO₂) is contained, the high refractive material layer(s) may further contain an aluminum oxide-based material (e.g., Al₂O₃) so that the reliability of the high refractive material layer(s) is improved. As mentioned above, the first filter layer FL1 may have a transmittance of about 30% or less with respect to at least a part of light in a wavelength band of about 800 nm or more and about 950 nm or less.

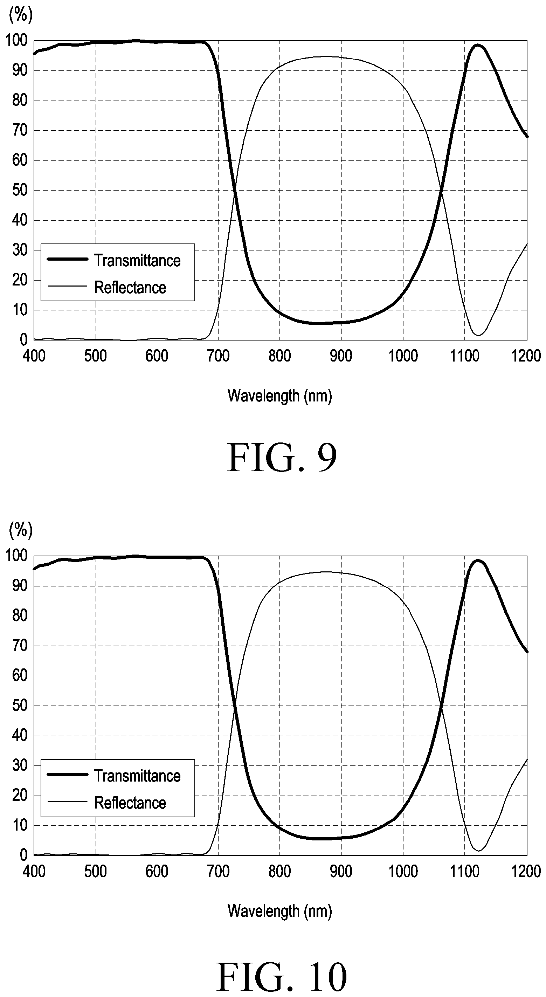

The light transmittance (or reflectance) of the first filter layer FL1 manufactured according to the first specification of [Table 1] is illustrated in FIG. 9, and the light transmittance (or reflectance) of the first filter layer FL1 manufactured according to the second specification of [Table 2] is illustrated in FIG. 10.

FIG. 9 is a view illustrating the transmittance and the reflectance of a first filter layer FL1 according to a first specification in a camera module 400, 500, or 600 according to an embodiment of the disclosure. FIG. 10 is a view illustrating the transmittance and the reflectance of a first filter layer FL1 according to a second specification in a camera module 400, 500, or 600 according to an embodiment of the disclosure.

With further reference to FIG. 9 and FIG. 10, it may be identified that the first filter layer FL1 substantially transmits light in a wavelength band of about 700 nm or less and blocks at least a part of the light in a wavelength band of about 700 nm or more and about 1100 nm or less. In an embodiment, the transmittance of the first filter layer FL1 with respect to light in a wavelength band of about 800 nm or more and about 950 nm or less may be about 30% or less, and it may be identified that when the first filter layer FL1 is manufactured according to the first specification or the second specification, the first filter layer has a transmittance of about 10% or less with respect to light in a wavelength band of about 800 nm or more and about 950 nm or less.

According to an embodiment, the second filter layer FL2 may include a plurality of low refractive material layers and a plurality of high refractive material layers alternately stacked. For example, the second filter layer FL2 may be implemented by alternately stacking at least six low refractive material layers and at least six high refractive material layers. As mentioned above, the second filter layer FL2 may be disposed between the first lens L1 and the nth lens L5, L6, or L7), and in an embodiment, it may be understood that the second filter layer FL2 is provided on at least another one of the lens surfaces of at least three lenses between the first lens L1 and the nth lens L5, L6, or L7. In an embodiment, when one first filter layer FL1 and one second filter layer FL2 are provided, the first filter layer FL1 may be provided on one surface of one lens of the lenses between the first lens L1 and the nth lens L5, L6, or L7, and the second filter layer FL2 may be provided on the other surface of the one lens of the lenses between the first lens L1 and the nth lens L5, L6, or L7.

According to an embodiment, the second filter layer FL2 may be manufactured according to a first specification presented through the following [Table 3], or a second specification presented through the following [Table 4].

**[Table 3]**

| Material layer | Material | Refractive Index | Extinction Coefficient | Full wavelength optical thickness (FWOT) | Physical thickness (nm) |
|---|---|---|---|---|---|
| | Air | 1 | | | |
| 1 | L | 1.45992 | 0 | 0.22937878 | 86.41 |
| 2 | H | 2.31836 | 0.00016 | 0.3602821 | 85.47 |
| 3 | L | 1.45992 | 0 | 0.00570864 | 2.15 |
| 4 | H | 2.31836 | 0.00016 | 0.09228853 | 21.89 |
| 5 | L | 1.45992 | 0 | 0.46769997 | 176.2 |
| 6 | H | 2.31836 | 0.00016 | 0.46601351 | 110.56 |
| 7 | L | 1.45992 | 0 | 0.46914756 | 176.74 |
| 8 | H | 2.31836 | 0.00016 | 0.46168138 | 109.53 |
| 9 | L | 1.45992 | 0 | 0.46735145 | 176.07 |
| 10 | H | 2.31836 | 0.00016 | 0.48865619 | 115.93 |
| 11 | L | 1.45992 | 0 | 0.08644954 | 32.57 |
| 12 | H | 2.31836 | 0.00016 | 0.05420487 | 12.86 |
| Substrate | | 1.54627 | 0 | | |

**[Table 4]**

| Material layer | Material | Refractive Index | Extinction Coefficient | Full wavelength optical thickness (FWOT) | Physical thickness (nm) |
|---|---|---|---|---|---|
| | Air | 1 | | | |
| 1 | L | 1.45992 | 0 | 0.22820906 | 85.97 |
| 2 | H | 2.31836 | 0.00016 | 0.35768698 | 84.86 |
| 3 | L | 1.45992 | 0 | 0.00483187 | 1.82 |
| 4 | H | 2.31836 | 0.00016 | 0.09174619 | 21.77 |
| 5 | L | 1.45992 | 0 | 0.46482407 | 175.11 |
| 6 | H | 2.31836 | 0.00016 | 0.46327905 | 109.91 |
| 7 | L | 1.45992 | 0 | 0.46771126 | 176.2 |
| 8 | H | 2.31836 | 0.00016 | 0.46086739 | 109.33 |
| 9 | L | 1.45992 | 0 | 0.46673407 | 175.83 |
| 10 | H | 2.31836 | 0.00016 | 0.48935914 | 116.09 |
| 11 | L | 1.45992 | 0 | 0.08549188 | 32.21 |
| 12 | H | 2.31836 | 0.00016 | 0.05565961 | 13.2 |
| Substrate | | 1.54627 | 0 | | |

According to an embodiment, in implementing the second filter layer FL2, the low refractive material layer(s) may contain about 50% or more of a silicon oxide-based material (e.g., SiO₂). In an embodiment, the high refractive material layer(s) may contain about 50% or more of a titanium oxide-based material (e.g., TiO₂). In an embodiment, when about 50% or more of a titanium oxide-based material (e.g., TiO₂) is contained, the high refractive material layer(s) may further contain an aluminum oxide-based material (e.g., Al₂O₃) so that the reliability of the high refractive material layer(s) is improved. As mentioned above, the second filter layer FL2 may have a transmittance of about 30% or less with respect to at least a part of light in a wavelength band of about 1000 nm or more and about 1200 nm or less.

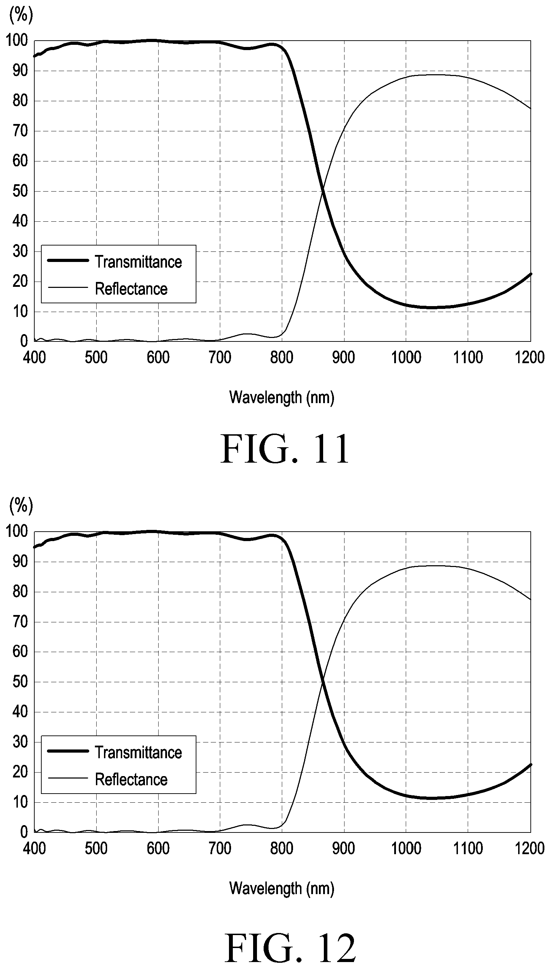

The light transmittance (or reflectance) of the second filter layer FL2 manufactured according to the first specification of [Table 3] is illustrated in FIG. 11, and the light transmittance (or reflectance) of the second filter layer FL2 manufactured according to the second specification of [Table 4] is illustrated in FIG. 12.

FIG. 11 is a view illustrating the transmittance and the reflectance of a second filter layer FL2 according to a first specification in a camera module 400, 500, or 600 according to an embodiment of the disclosure. FIG. 12 is a view illustrating the transmittance and the reflectance of a second filter layer FL2 according to a second specification in a camera module 400, 500, or 600 according to an embodiment of the disclosure.

With further reference to FIG. 11 and FIG. 12, it may be identified that the second filter layer FL2 substantially transmits light in a wavelength band of about 800 nm or less and blocks at least a part of the light in a wavelength band of about 800 nm or more and about 1200 nm or less. In an embodiment, the transmittance of the second filter layer FL2 with respect to light in a wavelength band of about 1000 nm or more and about 1200 nm or less may be about 30% or less, and it may be identified that the second filter layer FL2 of the first specification or the second specification has a transmittance of about 20% or less with respect to light in a wavelength band of about 1000 nm or more and about 1200 nm or less.

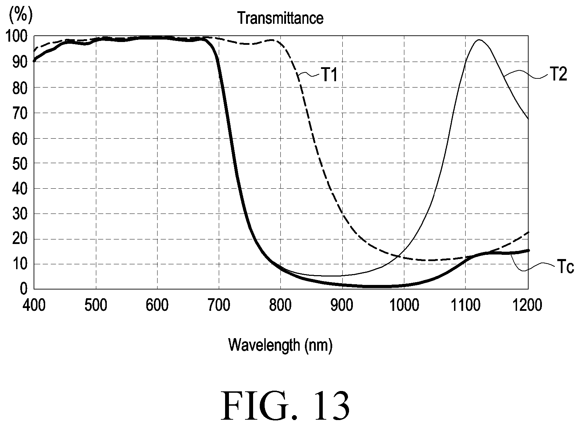

FIG. 13 is a view illustrating the transmittance when a first filter layer FL1 of a first specification and a second filter layer FL2 of a first specification are combined in a camera module 400, 500, or 600 according to an embodiment of the disclosure.

According to an embodiment, the camera module 600 of FIG. 8 may be manufactured by disposing the first filter layer FL1 implemented according to the specification of [Table 1] on a surface, which faces the subject, of lens surfaces of the second lens L2 and disposing the second filter layer FL2 implemented according to the specification of [Table 3] on a surface, which faces the image sensor, of the lens surfaces of the second lens L2. FIG. 13 may be a view illustrating the transmittance according to the wavelength of light guided from a camera module 600 to an image sensor I. For example, in FIG. 13, the graph indicated by "Tc" may illustrate the transmittance according to the wavelength of light guided to the image sensor I when the first filter layer FL1 implemented according to the specification of [Table 1] and the second filter layer FL2 implemented according to the specification of [Table 3] are arranged on one lens (e.g., the second lens L2 of FIG. 8). In FIG. 13, the graph indicated by "T1" may illustrate the light transmittance of the first filter layer FL1 implemented according to the specification of [Table 1], and the graph indicated by "T2" may illustrate the light transmittance of the second filter layer FL2 implemented according to the specification of [Table 3].

Referring to FIG. 13, in the camera module 600 according to an embodiment or embodiments of the disclosure, by providing the first filter layer FL1 and the second filter layer FL2 between the first lens L1 and the nth lens L5, L6, or L7 (e.g., the seventh lens L7 of FIG. 8), the camera module 600 and/or the lens assembly LA may have a transmittance of about 15% or less with respect to light in the 700-1200 nm wavelength band. In the illustrated embodiment, it may be understood that the camera module 600 and/or the lens assembly LA includes one first filter layer FL1 and one second filter layer FL2 and has a transmittance of about 10% or less with respect to light in 700-1200 nm wavelength band. When the camera module 400, 500, or 600 and/or the lens assembly LA further includes an infrared cut filter F regardless of the above-described arrangement of the first filter layer FL1 and/or the second filter layer FL2, the amount or the intensity of infrared light reaching the image sensor I may be further suppressed. For example, the lens assembly LA, the camera module 400, 500, or 600, and/or the electronic device (e.g., the electronic device 101, 200, or 300 of FIG. 1 to FIG. 5) including same according to an embodiment or embodiments of the disclosure may suppress light in a wavelength band, which is not perceptible to the naked eye of a user, from reaching the image sensor, thereby improving the quality of a captured image.

According to an embodiment, as previously mentioned, a plurality (e.g., one pair) of first filter layers FL1 and a plurality (e.g., one pair) of second filter layers FL2 may be provided between the first lens L1 and the nth lens L5, L6, or L7. For example, in the camera module 600 and/or the lens assembly LA of FIG. 8, when the first filter layer FL1 implemented according to the specification of [Table 1] is provided on each of both lens surfaces of the second lens L2, and the second filter layer FL2 implemented according to the specification of [Table 3] is provided on each of both lens surfaces of the third lens L3, it may be identified that the transmittance of light in a wavelength band of about 750 nm or more and about 1200 nm or less is suppressed to about 5% or less, and infrared light does not substantially reach the image sensor I or the imaging surface img.

As described above, a camera module (e.g., the camera module 205, 212, or 213 of FIG. 2 and FIG. 3 or the camera assembly 307 of FIG. 5) and/or an electronic device (e.g., the electronic device 101, 200, or 300 of FIG. 1 to FIG. 5) according to an embodiment or embodiments of the disclosure may be configured such that a filter layer or filter layers (e.g., the filter layer(s) FL1 or FL2 of FIG. 6) is or are implemented on a lens or a lens surface, and thus an infrared cut filter (e.g., the infrared cut filter F of FIG. 5 to FIG. 7) between a lens or lenses and an image sensor (e.g., the image sensor I of FIG. 5 to FIG. 7) may be omitted. For example, camera modules can be miniaturized and be easily mounted on miniaturized electronic devices. In an embodiment, filters of different specifications (e.g., filters filtering out light in different wavelength bands) may be combined to substantially block light in a wavelength band which is not visible to the naked eye of a user but is detectable by an image sensor, and thus the camera module and/or the electronic device according to an embodiment or embodiments of the disclosure may provide an image of improved quality.

The effects obtainable from the disclosure are not limited to the effects mentioned above, and other effects not mentioned will be clearly understood by those skilled in the art to which the disclosure pertains from the description of the above-described embodiment(s).

As described above, a camera module (e.g., the camera module 205, 212, or 213 of FIG. 2 and FIG. 3 or the camera assembly 307 of FIG. 5) according to an embodiment of the disclosure may include an image sensor (e.g., the image sensor I of FIG. 6 to FIG. 8) and a lens assembly (e.g., the lens assembly LA of FIG. 6 to FIG. 8) including at least five lenses sequentially aligned on an optical axis in a direction toward the image sensor. In an embodiment, in the camera module as described above, the lens assembly may include a first lens (e.g., the first lens L1 of FIG. 6 to FIG. 8), which is disposed farthest from the image sensor, among the at least five lenses, an nth lens (e.g., the nth lens L5, L6, or L7 of FIG. 6 to FIG. 8), which is disposed closest to the image sensor, among the at least five lenses, at least three lenses, which are arranged between the first lens and the nth lens, among the at least five lenses, a first filter layer (e.g., the first filter layer FL1 of FIG. 6) provided on at least one of lens surfaces of the at least three lenses, the first filter layer having a transmittance of 30% or less with respect to at least a portion of light in a wavelength band of 800-950 nm, and a second filter layer (e.g., the second filter layer FL2 of FIG. 6) provided on at least one of the other lens surfaces of the at least three lenses, the second filter layer having a transmittance of 30% or less with respect to at least a portion of light in a wavelength band of 1000-1200 nm.

According to an embodiment, among the at least three lenses, a lens to which the first filter layer or the second filter layer is provided may be a plastic lens.

According to an embodiment, the first filter layer or the second filter layer may be provided on a lens having the smallest effective diameter or the smallest outer diameter among the at least three lenses.

According to an embodiment, among the at least three lenses, the lens to which the first filter layer or the second filter layer is provided may be a plastic lens and be a lens having a relatively small effective diameter or outer diameter.

According to an embodiment, the first filter layer may be provided on one of both lens surfaces of a lens having the smallest effective diameter or a lens having the smallest outer diameter among the at least three lenses, and the second filter layer may be provided on the other of both lens surfaces of the lens having the smallest effective diameter or the lens having the smallest outer diameter among the at least three lenses.

According to an embodiment, the first filter layer or the second filter layer may be provided on a lens having the second smallest effective diameter or outer diameter among the at least three lenses.

According to an embodiment, the first filter layer or the second filter layer may be provided on a lens having the largest curvature among the at least three lenses.

According to an embodiment, the first filter layer may be provided on one of both lens surfaces of a lens having the largest curvature among the at least three lenses, and the second filter layer may be provided on the other of both lens surfaces of the lens having the largest curvature among the at least three lenses.

According to an embodiment, the first filter layer or the second filter layer may be provided on a lens having the second largest curvature among the at least three lenses.

According to an embodiment, the first filter layer or the second filter layer may include a plurality of low refractive material layers and a plurality of high refractive material layers alternately stacked.

According to an embodiment, the plurality of low refractive material layers may contain 50% or more of a silicon oxide-based material.

According to an embodiment, the plurality of high refractive material layers may contain 50% or more of a titanium oxide-based material.

According to an embodiment, the plurality of high refractive material layers may further contain an aluminum oxide-based material.

According to an embodiment, the lens assembly may have a transmittance of 15% or less with respect to light in the wavelength band of 700-1200 nm.

According to an embodiment, the camera module and/or the lens assembly therefor as described above may further include an infrared cut filter (e.g., the infrared cut filter F of FIG. 6 to FIG. 8) disposed between the nth lens and the image sensor.

According to an embodiment of the disclosure, an electronic device (e.g., the electronic device 101, 200, or 300 of FIGS. 1 to 5) may include an image sensor (e.g., the image sensor I of FIG. 6 to FIG. 8), a processor (e.g., the processor 120 of FIG. 1) configured to acquire a subject image by using the image sensor, and a lens assembly (e.g., the lens assembly LA of FIG. 6 to FIG. 8) including at least five lenses sequentially aligned on an optical axis in a direction toward the image sensor. In an embodiment, the lens assembly may include a first lens (e.g., the first lens L1 of FIG. 6 to FIG. 8), which is disposed farthest from the image sensor, among the at least five lenses, an nth lens (e.g., the nth lens L5, L6, or L7 of FIG. 6 to FIG. 8), which is disposed closest to the image sensor, among the at least five lenses, at least three lenses, which are arranged between the first lens and the nth lens, among the at least five lenses, a first filter layer (e.g., the first filter layer FL1 of FIG. 6) provided on at least one of lens surfaces of the at least three lenses, the first filter layer having a transmittance of 30% or less with respect to at least a portion of light in a wavelength band of 800-950 nm, and a second filter layer (e.g., the second filter layer FL2 of FIG. 6) provided on at least one of the other lens surfaces of the at least three lenses, the second filter layer having a transmittance of 30% or less with respect to at least a portion of light in a wavelength band of 1000-1200 nm.

According to an embodiment, among the at least three lenses, a lens to which the first filter layer or the second filter layer is provided may be a plastic lens.

According to an embodiment, the first filter layer or the second filter layer may be provided on a lens having the smallest effective diameter or the smallest outer diameter among the at least three lenses.

According to an embodiment, among the at least three lenses, the lens to which the first filter layer or the second filter layer is provided may be a plastic lens and be a lens having a relatively small effective diameter or outer diameter.

According to an embodiment, the first filter layer or the second filter layer may be provided on a lens having the largest curvature among the at least three lenses.

According to an embodiment, the first filter layer or the second filter layer may include a plurality of low refractive material layers and a plurality of high refractive material layers alternately stacked. In an embodiment, the plurality of low refractive material layers may contain 50% or more of a silicon oxide-based material, and the plurality of high refractive material layers may contain 50% or more of a titanium oxide-based material.

According to an embodiment, the plurality of high refractive material layers may further contain an aluminum oxide-based material.

The disclosure has been described with reference to embodiments, but it should be understood that the embodiments are for illustration and do not limit the disclosure. In addition, it will be apparent to those skilled in the art that various changes may be made in the form and details of the disclosure in scope without departing from the overall perspective of the disclosure, including the appended claims and their equivalents.

## Claims

1. A camera module (205; 212; 213; 307), comprising:
an image sensor (I); and
a lens assembly (LA) including at least five lenses sequentially arranged on an optical axis in a direction toward the image sensor,
wherein the lens assembly includes:
a first lens (L1), among the at least five lenses, disposed farthest from the image sensor;
an nth lens (L5, L6, L7), among the at least five lenses, disposed closest to the image sensor;
at least three lenses, among the at least five lenses, disposed between the first lens and the nth lens;
a first filter layer (FL1) provided on at least one of lens surfaces of the at least three lenses, the first filter layer having a transmittance of 30% or less for at least a portion of light in a wavelength band of 800-950 nm; and
a second filter layer (FL2) provided on at least another one of the lens surfaces of the at least three lenses, the second filter layer having a transmittance of 30% or less for at least a portion of light in the wavelength band of 1000-1200 nm.

2. The camera module of claim 1, wherein a lens, among the at least three lenses, provided with the first filter layer or the second filter layer is a plastic lens.

3. The camera module of any one of claims 1 to 2, wherein the first filter layer or the second filter layer is provided on a lens with the smallest effective diameter or a lens with the smallest outer diameter among the at least three lenses.

4. The camera module of claim 3, wherein the first filter layer is provided on one of both lens surfaces of the lens with the smallest effective diameter or with the smallest outer diameter among the at least three lenses, and the second filter layer is provided on the other of the both lens surfaces of the lens with the smallest effective diameter or with the smallest outer diameter among the at least three lenses.

5. The camera module of any one of claims 1 to 4, wherein the first filter layer or the second filter layer is provided on a lens with the second smallest effective diameter or outer diameter among the at least three lenses.

6. The camera module of any one of claims 1 to 5, wherein the first filter layer or the second filter layer is provided on a lens with the largest curvature among the at least three lenses.

7. The camera module of claim 6, wherein the first filter layer is provided on one of both lens surfaces of the lens with the largest curvature among the at least three lenses, and the second filter layer is provided on the other of the both lens surfaces of the lens with the largest curvature among the at least three lenses.

8. The camera module of any one of claims 1 to 7, wherein the first filter layer or the second filter layer is provided on a lens having the second largest curvature among the at least three lenses.

9. The camera module of any one of claims 1 to 8, wherein the first filter layer or the second filter layer includes a plurality of low refractive material layers and a plurality of high refractive material layers alternately stacked

10. The camera module of claim 9, wherein the plurality of low refractive material layers contain 50% or more of a silicon oxide-based material.

11. The camera module of any one of claims 9 to 10, wherein the plurality of high refractive material layers contain 50% or more of a titanium oxide-based material.

12. The camera module of claim 11, wherein the plurality of high refractive material layers further include an aluminum oxide-based material.

13. The camera module of any one of claims 1 to 12, wherein the lens assembly has a transmittance of 15% or less for light in the wavelength band of 700-1200 nm.

14. The camera module of any one of claims 1 to 13, further comprising:
an infrared cut filter (F) disposed between the nth lens and the image sensor.

15. An electronic device (101; 200; 300) comprising:
a camera module according to any one of claims 1 to 14; and
a processor (120) configured to acquire a subject image by using the image sensor.
